# EUROPÄISCHE PATENTSCHRIFT

(11) **EP 3 584 480 B1**
(45) Veröffentlichungstag und Bekanntmachung des Hinweises auf die Patenterteilung: **10.03.2021**
(21) Anmeldenummer: 19180328.7
(22) Anmeldetag: 14.06.2019
(51) Int. Cl.: F16K 37/00

(54) **ERKENNEN MANGELHAFTER SITZ-INTEGRITÄT BEI EINEM STELLVENTIL**
DETECTION OF DEFECTIVE SEAT INTEGRITY IN A CONTROL VALVE
DÉTECTION DE L'INTÉGRITÉ DE SIÈGE DÉFECTUEUSE D'UNE SOUPAPE DE RÉGLAGE

(30) Priorität: 19.06.2018 DE 102018114710
(43) Veröffentlichungstag der Anmeldung: 25.12.2019
(73) Patentinhaber: Samson Aktiengesellschaft, 60314 Frankfurt am Main (DE)
(72) Erfinder: WAGNER-STÜRZ, DAVID, 64367 Mühltal (DE)
(74) Vertreter: Köllner, Malte

(56) Entgegenhaltungen:
- JP-A- 2004 198 308
- US-A1- 2009 222 220
- US-A1- 2009 306 830
- US-B1- 9 934 671

## Beschreibung

### Gebiet der Erfindung

Die Erfindung betrifft ein Verfahren zum Erkennen mangelhafter Sitz-Integrität eines Stellventils, sowie ein Stellventil mit entsprechenden Mitteln.

Stellventile, auch Prozessventile genannt, bestehen aus einem beweglichen Stellglied bzw. Ventilglied und einer Öffnung im Ventilgehäuse. Das Ventilglied ist in der Lage, diese Öffnung entweder teilweise bzw. vollständig freizugeben oder zu verschließen. Im geschlossenen Zustand sollte das Ventil weitestgehend dicht schließen. Zur Definition der Dichtheit gibt es Dichtheitsklassen. Um die entsprechenden Dichtheitsklassen einzuhalten, gibt es unterschiedliche Dichtsitzkonstruktionen. Meistens besitzt das Ventilglied eine ringförmige Kontur, welche in einen speziellen Sitzring im Gehäuseinneren eingreift. Weich dichtende Sitzdichtelemente können nur bei niedrigen Temperaturen und niedrigen Druckdifferenzen eingesetzt werden. Für anspruchsvollere Einsätze sind harte Ventilsitzkonstruktionen geeignet (z.B. gehärteter Stahl, Stellite, Keramik). Bei Stellventilen mit hohen Dichtheitsklassen ist es besonders wichtig, dass über eine bestimmte Zeit (Wartungsintervall) die Dichtfläche des Stellglieds sowie der Sitzkante des Gehäusesitzes nur so viel Verschleiß erfährt, das die gewünschte Dichtheitsklasse eingehalten bleibt. Da sich allerdings die Sitzkonturen im inneren des Ventils befinden, kann keine optische Kontrolle der Sitz-Integrität stattfinden. Es ist ebenfalls sehr schwierig, den Durchfluss einer sehr kleinen Leckage zu bestimmen.

### Stand der Technik

Zur Messung der Integrität eines Ventilsitzes beschreibt die Druckschrift EP 2 646 723 B1 eine Methode, welche das Soll-Ansteuersignal mit der Ist-Position vergleicht und mit Hilfe eines Kraftsensors auf die Sitz-Integrität schließt. Hierfür wird ein Kraftsensor zur Kraftmessung am Ventilglied benötigt.

Die Druckschrift EP 315 391 B1 beschreibt mehrere Abtastsysteme, bei denen Abtastwerte mit Referenzwerten verglichen werden, um Abweichungen beim Betrieb eines Ventils festzustellen. Nachteilig ist dabei, dass entweder zusätzliche Kraftsensoren oder zusätzliche Abtasteinrichtungen benötigt werden, um auf einen Verschleiß des Ventils schließen zu können

Die Druckschrift US 2009/0306830 A1 offenbart ein Verfahren nach dem Oberbegriff des Anspruchs 1.

### Aufgabe

Aufgabe der Erfindung ist es, Verfahren und Vorrichtungen zum Erkennen mangelhafter Sitz-Integrität bei einem Stellventil bereitzustellen, welche ohne zusätzliche Sensoren oder Abtasteinrichtungen auskommen.

### Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zum Erkennen mangelhafter Sitz-Integrität bei einem Stellventil mit einem Stellglied vorgeschlagen, das die folgenden Schritte aufweist:
Zum Erlangen eines Kalibrations-Datensatzes wird während eines Zeitintervalls wiederholt die Position des Stellglieds des Stellventils in der Schließstellung gemessen und aufgezeichnet. Zum Messen genügt hierbei der üblicherweise an dem Prozessventil vorhandene Stellungsnehmer bzw. Positionssensor. Es wird also kein zusätzlicher Sensor benötigt. Aus diesem Kalibrations-Datensatz werden der Mittelwert und die Standardabweichung der Position des Stellglieds in der Schließstellung berechnet. Das Zeitintervall ist dabei so gewählt, dass sämtliche unterschiedlichen vorkommenden Prozesszustände (Prozessrauschen), bei denen das Ventil die Schließstellung einnimmt, berücksichtigt werden. Die prozessbedingte Schwankung der Position des Ventilglieds in der Schließstellung wird folglich vom Kalibrations-Datensatz erfasst.

Während des weiteren Betriebs des Stellventils wird weiterhin die Position des Stellglieds in der Schließstellung gemessen und aufgezeichnet. Diese Messung erfolgt vorzugsweise permanent andauernd, so lange der Betrieb der Anlage läuft. Über eine vorgegebene Anzahl der im weiteren Betrieb gemessenen Positionen wird ein gleitender Mittelwert fortlaufend bestimmt. Dieser gleitende Mittelwert schwankt natürlich viel weniger als das Prozessrauschen, so dass sich ein deutlich höheres Konfidenzlevel ergibt. Aus dem Mittelwert und der Standardabweichung der Position des Stellglieds aus dem Kalibrations-Datensatz und der vorgegebenen Anzahl wird eine Schwelle für den gleitenden Mittelwert bestimmt. Wenn der gleitende Mittelwert um mehr als diese Schwelle vom Mittelwert des Kalibrations-Datensatzes abweicht, wird eine Meldung ausgegeben, da die Sitz-Integrität des Ventilsitzes des Prozessventils gelitten haben könnte. Aus einer festgestellten Verschiebung der Nullpunktlage des Ventilgliedes in der geschlossenen Ventilposition wird also auf einen Verschleiß des Sitzes geschlossen.

Als Schwelle kommt dabei typischerweise die Standardabweichung des gleitenden Mittelwertes zum Einsatz. Diese ergibt sich beispielsweise, indem man die Standardabweichung der Position des Stellglieds in der Schließstellung, die aus dem Kalibrations-Datensatz bestimmt werden kann, durch die Wurzel aus der vorgegebenen Anzahl dividiert. Denkbar sind jedoch auch andere Schwellen, z.B. das n-fache dieser Standardabweichung des gleitenden Mittelwertes. Häufig wird n = 3 gewählt (sog. 3-Sigma-Schwelle).

Zudem lässt sich ggf. aus dem Kalibrations-Datensatz eine absolute Schwelle definieren: Diese ergibt sich aus dem Maximum und/oder Minimum während des Zeitintervalls zur Messung des Kalibrations-Datensatzes. Hierbei wird angenommen, dass in diesem Kalibrations-Zeitintervall keine Unregelmäßigkeiten auftreten, aber die gesamte Bandbreite normaler Prozess-Zustände abgedeckt wird. Diese absolute Schwelle kann beim Betrachten einzelner Datenpunkte von Interesse sein und kann außerdem als zusätzliches Kriterium zum Einsatz kommen.

Das Verfahren funktioniert am besten, wenn das Stellventil einen harten Ventilsitz aufweist.

Vorzugsweise wird die vorgegebene Schwelle durch ein Konfidenzintervall des gleitenden Durchschnitts definiert, beispielsweise durch das 90%- oder 95%-Konfidenzintervall. Hierdurch kann ein mathematisch sinnvoller Kompromiss zwischen frühzeitiger Fehlererkennung und Vermeidung von Fehldiagnosen erreicht werden.

Wenn innerhalb eines weiteren Zeitintervalls der gleitende Mittelwert mehrfach um mehr als die Schwelle vom Mittelwert des Kalibrations-Datensatzes abweicht, wird aus den innerhalb des weiteren Zeitintervalls gemessenen Positionen eine Gerade gebildet, wobei die Steigung und der Achsenabschnitt der Geraden bestimmt werden. Erfindungsgemäß wird eine Meldung ausgegeben, wenn der Betrag der Steigung der Geraden größer ist als der Quotient aus der Schwelle und der Länge des weiteren Zeitintervalls und/oder der Achsenabschnitt um mehr als die Schwelle von einem Kalibrations-Achsenabschnitt aus dem Kalibrations-Datensatz abweicht.

Dadurch lässt sich ein Fehler bei der Schließstellung des Stellventils besonders gut vom Prozessrauschen unterscheiden. Zudem lässt sich ggf. genauer analysieren, weshalb sich die Sitz-Integrität des Ventils verschlechtert hat, und eventuell lässt sich auf diese Weise sogar der Zeitpunkt des Beginns eines Fehlerzustands ermitteln.

Eine Meldung kann auch ausgegeben werden, wenn bei der weiteren Messung der Position des Stellglieds in der Schließstellung ein neuer Messwert um mehr als die Standardabweichung der Position des Stellglieds aus dem Kalibrations-Datensatz vom vorhergehenden Messwert abweicht. Dies ist besonders dann vorteilhaft, wenn sich die Schließstellung des Ventils sprunghaft ändert.

Die Realisierung des vorgeschlagenen Verfahrens gestaltet sich besonders einfach und sicher, wenn das Stellventil ein Steuermodul aufweist und das Verfahren auf dem Steuermodul des Stellventils abläuft. Insbesondere ist dann ein Netzwerkzugriff auf die Ventilsteuerung nicht notwendig, so dass aufwendige Sicherheitsvorkehrungen zur Gewährleistung der Netzwerksicherheit, z.B. zur Abwehr von Hackerangriffen, entfallen können.

Für die Verwaltung einer Anlage mit einer Mehrzahl von Ventilen, oder auch mit schwer zugänglichen Ventilen, deren regelmäßige Kontrolle mit besonderem Aufwand verbunden ist, ist es besonders günstig, wenn das Verfahren auf mindestens einem Gerät abläuft, welches über ein Netzwerk mit dem Steuermodul des Stellventils verbunden ist. Bei dem mindestens einen Gerät kann es sich z.B. um Computer in der sogenannten Cloud handeln. Die Überwachung der Ventile kann somit zentralisiert, ggf. an einem fern liegenden Ort stattfinden, und es ist kein hoher Aufwand notwendig, um aufwendige Berechnungen und/oder Analysen mit den Daten anzustellen.

Die Aufgabe wird auch gelöst durch ein Stellventil, mit Mitteln zum Messen und zum Aufzeichnen der Position des Ventilgliedes in der Schließstellung, wobei die Position des Ventilgliedes bei jedem Einnehmen der Schließstellung gemessen und aufgezeichnet werden kann. Außerdem mit Mitteln zum Berechnen eines Mittelwertes, eines gleitenden Mittelwertes und einer zugehörigen Standardabweichung aus aufgezeichneten Positionen und Mitteln zum Bestimmen und/oder Vorgeben von Zeitintervallen, wobei während eines Zeitintervalls wiederholt die Position des Stellglieds des Stellventils in der Schließstellung gemessen und aufgezeichnet werden können, um einen Kalibrations-Datensatz zu erlangen. Dabei können aus dem Kalibrations-Datensatz der Mittelwert und die Standardabweichung der Position des Stellglieds in der Schließstellung berechnet werden, wobei über eine vorgegebene Anzahl gemessener Positionen ein gleitender Mittelwert fortlaufend bestimmt werden kann, und wobei aus dem Mittelwert und der Standardabweichung der Position des Stellglieds aus dem Kalibrations-Datensatz und der vorgegebenen Anzahl eine Schwelle für den gleitenden Mittelwert bestimmt werden kann. Zudem hat ein nicht erfindungsgemäßes Stellventil Mittel zum Ausgeben einer Meldung, die so konfiguriert sind, dass eine Meldung wegen mangelhafter Sitz-Integrität ausgegeben wird, wenn der gleitende Mittelwert um mehr als die Schwelle vom Mittelwert des Kalibrations-Datensatzes abweicht.

Besonders einfach und sicher (z.B. im Hinblick auf Netzwerksicherheit) gestaltet sich das Stellventil, wenn ein Steuermodul vorhanden ist, wobei die Mittel zum Messen und zum Aufzeichnen der Position des Ventilgliedes in der Schließstellung, zum Berechnen eines Mittelwertes, eines gleitenden Mittelwertes und einer zugehörigen Standardabweichung aus aufgezeichneten Positionen, zum Bestimmen und/oder Vorgeben von Zeitintervallen, und zum Ausgeben einer Meldung durch das Steuermodul bereitgestellt werden.

Eine zentralisierte Überwachung, und vergleichsweise geringer Aufwand bei ggf. erforderlichen aufwendigen Berechnungen und/oder Analysen der Daten wird erreicht, wenn das Stellventil ein Steuermodul hat, wobei die Mittel zum Messen und zum Aufzeichnen der Position des Ventilgliedes in der Schließstellung, zum Berechnen eines Mittelwertes, eines gleitenden Mittelwertes und einer zugehörigen Standardabweichung aus aufgezeichneten Positionen, zum Bestimmen und/oder Vorgeben von Zeitintervallen, und zum Ausgeben einer Meldung durch mindestens ein Gerät bereitgestellt werden, welches über ein Netzwerk mit dem Steuermodul verbunden ist. Bei dem mindestens einen Gerät kann es sich z.B. um Computer in einer Cloud handeln.

Ferner wird die Aufgabe gelöst durch ein Computerprogramm, welches ausführbare Instruktionen beinhaltet, welche bei Ausführung auf einer Recheneinheit, einem Mikrocontroller, DSP, FPGA oder Computer oder auf einer Mehrzahl davon in einem Netzwerk das Verfahren nach einem der vorhergehenden Verfahrensansprüche ausführt.

Weiterhin wird die Aufgabe gelöst durch ein Computerprogramm mit Programmcode-Mitteln, um das erfindungsgemäße Verfahren in einer seiner Ausgestaltungen durchzuführen, wenn das Programm auf einer Recheneinheit, einem Mikrocontroller, DSP, FPGA oder Computer oder auf einer Mehrzahl davon in einem Netzwerk ausgeführt wird. Insbesondere können die Programmcode-Mittel auf einem computerlesbaren Datenträger gespeicherte Instruktionen sein.

Außerdem wird die Aufgabe gelöst durch einen Datenträger, auf dem eine Datenstruktur gespeichert ist, die nach einem Laden in einen Arbeits- und/oder Hauptspeicher einer Recheneinheit, eines Mikrocontrollers, DSPs, FPGAs oder Computers oder einer Mehrzahl davon in einem Netzwerk das erfindungsgemäße Verfahren in einer seiner Ausgestaltungen ausführen kann.

Auch wird die Aufgabe gelöst durch ein Computerprogramm-Produkt mit auf einem maschinenlesbaren Träger gespeicherten Programmcode-Mitteln, um das erfindungsgemäße Verfahren in einer seiner Ausgestaltungen durchzuführen, wenn das Programm auf einer Recheneinheit, einem Mikrocontroller, DSP, FPGA oder Computer oder auf einer Mehrzahl davon in einem Netzwerk ausgeführt wird. Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Schließlich wird die Aufgabe gelöst durch ein moduliertes Datensignal, welches von einer Recheneinheit, einem Mikrocontroller, DSP, FPGA oder Computer oder von einer Mehrzahl davon in einem Netzwerk ausführbare Instruktionen zum Ausführen des erfindungsgemäßen Verfahrens in einer seiner Ausgestaltungen enthält.

Als Computersystem zum Ausführen des Verfahrens kommen sowohl ein einzelner Computer oder Mikrocontroller, DSPs oder FPGAs in Betracht, als auch ein Netzwerk von Mikrocontrollern, DSPs, FPGAs oder Rechnern, beispielsweise ein hausinternes, geschlossenes Netz, oder auch Rechner, die über das Internet miteinander verbunden sind. Ferner kann das Computersystem durch eine Client-Server-Konstellation realisiert sein, wobei Teile der Erfindung auf dem Server, andere auf einem Client ablaufen.

Außerdem wird die Aufgabe durch ein Steuermodul für ein Stellventil gelöst, mit Mitteln zum Messen und zum Aufzeichnen der Position des Ventilgliedes des Stellventils in der Schließstellung, wobei die Position des Ventilgliedes bei jedem Einnehmen der Schließstellung gemessen und aufgezeichnet werden kann. Außerdem mit Mitteln zum Berechnen eines Mittelwertes, eines gleitenden Mittelwertes und einer zugehörigen Standardabweichung aus aufgezeichneten Positionen und Mitteln zum Bestimmen und/oder Vorgeben von Zeitintervallen, wobei während eines Zeitintervalls wiederholt die Position des Stellglieds des Stellventils in der Schließstellung gemessen und aufgezeichnet werden kann, um einen Kalibrations-Datensatz zu erlangen. Dabei können aus dem Kalibrations-Datensatz der Mittelwert und die Standardabweichung der Position des Stellglieds in der Schließstellung berechnet werden, wobei über eine vorgegebene Anzahl gemessener Positionen ein gleitender Mittelwert fortlaufend bestimmt werden kann, und wobei aus dem Mittelwert und der Standardabweichung der Position des Stellglieds aus dem Kalibrations-Datensatz und der vorgegebenen Anzahl eine Schwelle für den gleitenden Mittelwert bestimmt werden kann. Zudem hat ein nicht erfindungsgemäßes Steuermodul Mittel zum Ausgeben einer Meldung, die so konfiguriert sind, dass eine Meldung wegen mangelhafter Sitz-Integrität ausgegeben wird, wenn der gleitende Mittelwert um mehr als die Schwelle vom Mittelwert des Kalibrations-Datensatzes abweicht.

Mit einem solchen Steuermodul lassen sich bereits existierende Stellventile in erfindungsgemäßer Weise nachrüsten.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1A: den typischen Aufbau eines Stellventils in geöffneter Stellung;
- Fig. 1B: den typischen Aufbau eines Stellventils in geschlossener Stellung;
- Fig. 2: einen typischen Verlauf der Ventilposition in Schließstellung, wobei sich die Position gleichmäßig verändert; und
- Fig. 3: einen typischen Verlauf der Ventilposition in Schließstellung, bei dem eine sprunghafte Veränderung stattfindet.

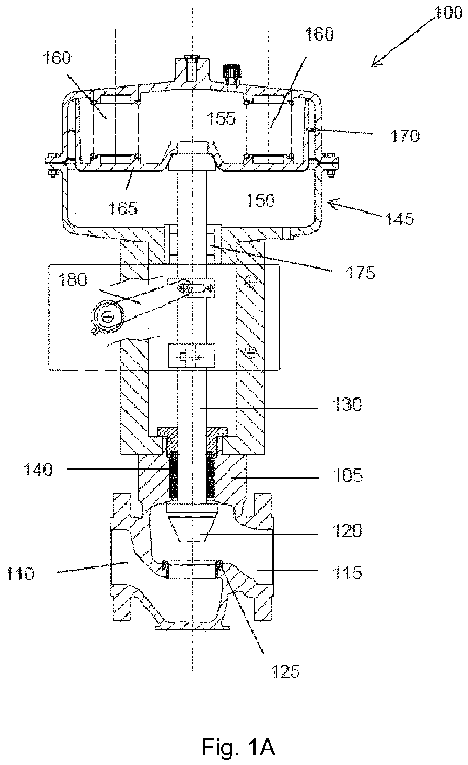

Fig. 1A zeigt einen typischen Aufbau eines Stellventils 100 mit einem Ventilgehäuse 105. Zwischen der Zuströmseite 110 und der Abströmseite 115 befindet sich ein Ventilglied 120, das zum Drosseln der Strömung eines von der Zuströmseite 110 zur Abströmseite 115 fließenden Prozessfluids in den Ventilsitz 125 gepresst werden kann. Dazu dient die Ventilstange bzw. Antriebsstange 130. Die Durchführung der Ventilstange 130 durch das fluiddichte Ventilgehäuse 105 ist durch eine Dichtung bzw. Stopfbuchse 140 abgedichtet.

Am oberen Ende der Ventilstange 130 befindet sich ein fluidischer Antrieb 145, wobei das Antriebsfluid typischerweise Gas ist. Der Antrieb 145 weist zwei Kammern auf, eine untere Druckluftkammer 150 und eine obere Kammer 155, in der Federn 160 über eine Platte 165 auf die Ventilstange 130 einwirken. Die beiden Kammern 150 und 155 sind durch eine Membran 170 voneinander getrennt, wobei die Membran 170 undurchlässig ist gegenüber dem Antriebsfluid, typischerweise Druckluft. Ein solcher Aufbau wird als einfachwirkender Pneumatikantriebe bezeichnet, da nur in eine Kammer, die Druckluftkammer 150, Druckluft eingeführt wird und nicht in beide. Die Durchführung der Ventilstange 130 durch das Gehäuse des Antriebs 145 muss dicht sein gegenüber dem Antriebsfluid. Zu diesem Zweck ist diese Durchführung durch eine Antriebsgehäuse-Abdichtung 175 abgedichtet.

Typischerweise befindet sich an der Ventilstange 130 noch ein Signalnehmer bzw. Stellungssensor 180 zum Bestimmen der Position des Ventilglieds 120.

In Fig. 1A befindet sich ausreichend Druckluft in der Druckluftkammer 150, so dass das Stellventil 100 geöffnet ist.

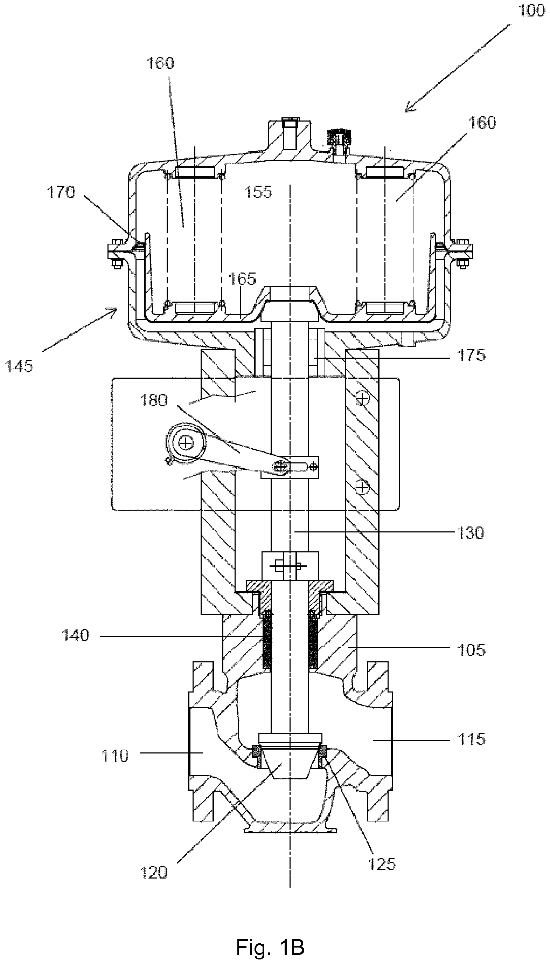

In Fig. 1B ist die Druckluftkammer 150 entlüftet, so dass die Federn 160 das Stellventil 160 schließen konnten.

Zur Beurteilung der Integrität des Ventilsitzes wird die Verschiebung der Nullpunktlage des Ventilgliedes in der geschlossenen Ventilposition während des laufenden Prozessbetriebes gemessen und hieraus auf Verschleiß des Sitzes geschlossen. Zur Messung der Lage des Ventilgliedes verwendet man den ohnehin vorhanden Stellungssensor bzw. Signalnehmer 180. Mit dem Stellungssensor bzw. Signalnehmer 180 wird eine Vielzahl von Wegpunkten in der Schließposition des Ventilgliedes aufgenommen und ausgewertet.

Bei der Initialisierung des Stellventils wird das Stellventil erstmalig von der Offenstellung in die Schließstellung bewegt, dies geschieht meist ohne Prozessdruck, da das Ventil noch nicht in die Anlage integriert ist.

Beim ersten Schließen des Ventils unter Prozessbedingungen werden weitere Referenzpunkte aufgezeichnet. Die erhaltenen Wegpunkthistogramme werden zur Auswertung der Verschiebung des Schließpunktes herangezogen. Ein Vergleich der Wegpunkte bei der Initialisierung zu Wegpunkten unter Prozessbedingungen liefert einen ersten Anhaltspunkt für die Dehnungsbelastungen des Ventils unter Prozessbedingungen. Im laufenden Prozess werden nun, typischerweise in regelmäßigen Abständen, Wegpunkte bei geschlossenem Ventil aufgenommen. Anhand einer repräsentativen Anzahl von Wegpunkten wird das Prozessrauschen bestimmt, welches den wechselnden Prozessbedingungen der Anlage entspricht. Anhand des Prozessrauschens wird ein gleitender Durchschnitt gebildet. Dieser stetig gebildete gleitende Durchschnitt der Wegpunkte darf, über die Zeit, während des Prozesses, nicht signifikant steigend oder fallend sein. Falls eine von Null verschiedene Steigung vorliegt, kann auf einen Verschleiß des Ventilsitzes geschlossen werden, falls der Prozess unverändert verläuft.

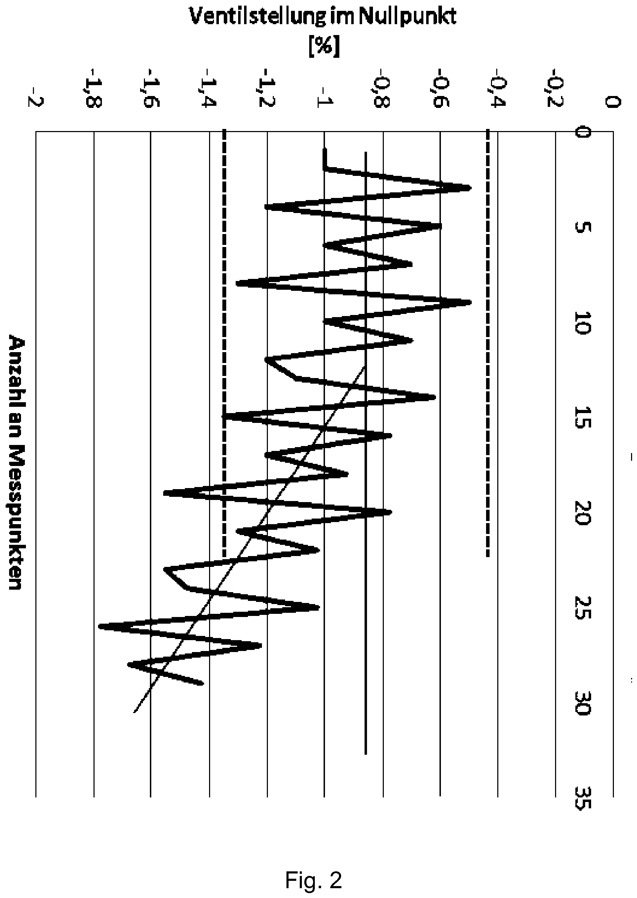

Beim Ermitteln des gleitenden Durchschnitts kann innerhalb des Prozesses ein langsames Abdriften der Wegpunktlage erkannt werden. Dies kann eine Steigung, wie in Fig. 2 dargestellt, verursachen, woraus z.B. auf einen Verschleiß geschlossen werden kann.

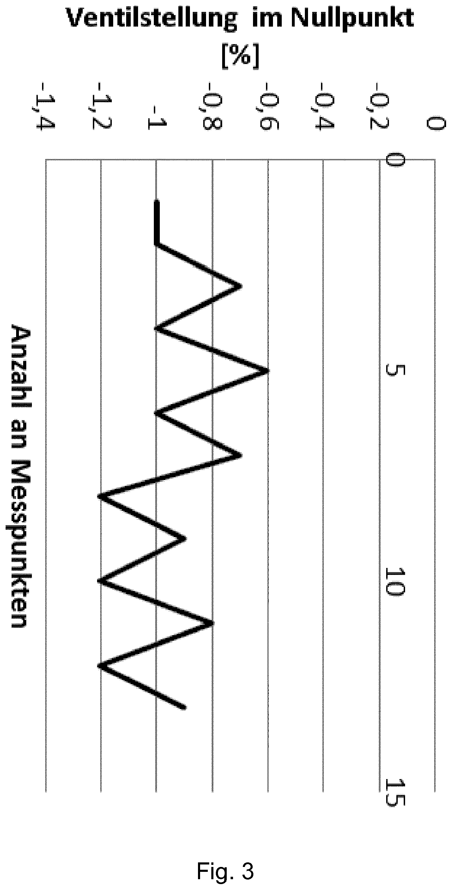

Bei einer plötzlich eintretenden Veränderung tritt hingegen eine Parallelverschiebung zur Referenzgeraden auf, wie in Fig. 3 dargestellt. Ist ein neuer Messpunkt um mehr als das Prozessrauschen von einem vorherigen Messpunkt entfernt, so deutet dies auf einen plötzlich eingetretenen Fehlerzustand hin. Dieser Fehler wird sofort erkannt.

Auch ohne zusätzliche Abtast- oder Sensorelemente ist so eine sehr präzise Fehlererkennung möglich. Kleinste Verschiebungen der Nulllage des Stellgliedes können trotz fehlender Prozesskenntnis erkannt werden. Das Herausfiltern des Prozessrauschens erlaubt sehr präzise Messpunktanalysen.

Es ist üblich, den tatsächlichen Verlauf mit festen Referenzwegpunkten oder -kurven zu vergleichen. Eine Prozessbereinigung findet dabei jedoch nicht statt, so dass nur sehr große Verschiebungen der Nulllage sicher erkannt werden. Mit dem hier beschriebenen Verfahren erhöht sich die Prozesssicherheit, da ein Verschleiß z.B. an Ventilsitz und/oder Ventilkegel früher erkannt werden. Obwohl keinerlei Prozessdaten oder Daten zur Andruckkraft des Schließelementes benötigt werden, kann auf Verschleiß am Sitz geschlossen werden.

### Glossar

### Gleitender Durchschnitt

Der gleitende Mittelwert (auch: gleitender Durchschnitt) ist eine Methode zur Glättung von Zeit- bzw. Datenreihen. Die Glättung erfolgt durch das Entfernen höherer Frequenzanteile. Im Ergebnis wird eine neue Datenpunktmenge erstellt, die aus den Mittelwerten gleich großer Untermengen der ursprünglichen Datenpunktmenge besteht.

Die Menge der gleitenden Mittelwerte wird iterativ ("gleitend") über einen Ausschnitt, das "Fenster", eines gegebenen Signals berechnet. Das verwendete Fenster wird überlappend verschoben, d. h. wiederholt wird der erste Wert aus dem betrachteten Ausschnitt gestrichen, der erste Wert nach dem Ausschnitt hinzugenommen und ein neuer Mittelwert berechnet. Für die Berechnung des Mittelwerts können die im Fenster vorkommenden Werte anschließend beliebig gewichtet werden.

Anwendung findet der gleitende Mittelwert beispielsweise bei der Analyse von Zeitreihen. (nach https://de.wikipedia.org/wiki/Gleitender_Mittelwert)

### Konfidenzintervall

Ein Konfidenzintervall (auch Vertrauensbereich, Vertrauensintervall oder Erwartungsbereich genannt) ist ein Intervall aus der Statistik, das die Präzision der Lageschätzung eines Parameters (z.B. eines Mittelwertes) angeben soll. Das Konfidenzintervall gibt den Bereich an, der bei unendlicher Wiederholung eines Zufallsexperiments mit einer gewissen Wahrscheinlichkeit (dem Konfidenzniveau) die wahre Lage des Parameters einschließt.

Ein häufig verwendetes Konfidenzniveau ist 95%. Bei der Berechnung eines und desselben Konfidenzintervalls umschließen dessen Intervallgrenzen in 95% der Fälle den wahren Parameter und in 5% der Fälle nicht. (nach https://de.wikipedia.org/wiki/Konfidenzintervall).

### Mittelwert

Mittelwerte werden am häufigsten in der Statistik angewendet, wobei mit Mittel oder Durchschnitt meistens das arithmetische Mittel gemeint ist. Der Mittelwert ist ein Kennwert für die zentrale Tendenz einer Verteilung. Bei ungenauer Formulierung werden die Begriffe Mittelwert und Erwartungswert häufig synonym verwendet, der Erwartungswert beruht jedoch auf der theoretisch zu erwartenden Häufigkeit, während der (arithmetische) Mittelwert aus konkretem Datenmaterial ermittelt wird (nach https://de.wikipedia.org/wiki/Mittelwert). Sofern nichts anderes explizit angegeben wird, wird bei der vorliegenden Erfindung das arithmetische Mittel verwendet.

### Prozessventil, Stellventil

Prozessventile, auch Stell- oder Regelventile genannt, dienen zur Drosselung bzw. Regelung fluidischer Ströme. In einer Durchflussöffnung eines Ventilsitzes wird zu diesem Zweck ein Drosselkörper bzw. Ventilglied mittels eines Antriebs bewegt.

### Ventilsitz-Integrität

Unter Ventilsitz-Integrität ist die ausreichende Dichtheit des Ventilsitzes eines Prozessventils zu verstehen. Das Ventilglied besitzt häufig eine ringförmige Kontur, die in einen Sitzring im Ventilgehäuse eingreift. Falls der Ventilsitz Verschleißerscheinungen oder Beschädigungen zeigt, also nicht mehr als intakt anzusehen ist, kann das dazu führen, dass die erforderliche Dichtheit des Ventilsitzes nicht mehr gegeben ist. Die Sitz-Integrität ist dann als mangelhaft anzusehen.

### Bezugszeichen

- 100: Stell- bzw. Prozessventil
- 105: Ventilgehäuse
- 110: Zuströmseite
- 115: Abströmseite
- 120: Ventilglied
- 125: Ventilsitz
- 130: Ventilstange bzw. Antriebsstange
- 140: Stopfbuchse bzw. Dichtung
- 145: fluidischer Antrieb
- 150: Druckluftkammer
- 155: obere Kammer
- 160: Feder
- 165: Platte
- 170: Membran
- 175: Antriebsgehäuse-Abdichtung
- 180: Signalnehmer

### zitierte Literatur

### zitierte Patentliteratur

EP 2 646 723 B1
EP 315 391 B1
US 2009/0306830 A1

## Patentansprüche

1. Verfahren zum Erkennen mangelhafter Sitz-Integrität bei einem Stellventil mit einem Stellglied, mit folgenden Schritten:
1.1 zum Erlangen eines Kalibrations-Datensatzes wird während eines Zeitintervalls wiederholt die Position des Stellglieds des Stellventils in der Schließstellung gemessen und aufgezeichnet;
1.2 aus dem Kalibrations-Datensatz werden der Mittelwert und die Standardabweichung der Position des Stellglieds in der Schließstellung berechnet;
1.3 während des weiteren Betriebs des Stellventils wird weiterhin die Position des Stellglieds in der Schließstellung gemessen und aufgezeichnet;
1.4 über eine vorgegebene Anzahl der im weiteren Betrieb gemessenen Positionen wird ein gleitender Mittelwert fortlaufend bestimmt;
1.5 aus dem Mittelwert und der Standardabweichung der Position des Stellglieds aus dem Kalibrations-Datensatz und der vorgegebenen Anzahl wird eine Schwelle für den gleitenden Mittelwert bestimmt; **dadurch gekennzeichnet, dass**
1.6 wenn innerhalb eines weiteren Zeitintervalls der gleitende Mittelwert mehrfach um mehr als die Schwelle vom Mittelwert des Kalibrations-Datensatzes abweicht,
1.6.1 aus den innerhalb des weiteren Zeitintervalls gemessenen Positionen eine Gerade gebildet wird;
1.6.2 wobei die Steigung und der Achsenabschnitt der Geraden bestimmt werden; und
1.7 eine Meldung ausgegeben wird, wenn
1.7.1 der Betrag der Steigung der Geraden größer ist als der Quotient aus der Schwelle und der Länge des weiteren Zeitintervalls und/oder
1.7.2 der Achsenabschnitt um mehr als die Schwelle von einem Kalibrations-Achsenabschnitt aus dem Kalibrations-Datensatz abweicht.

2. Verfahren nach dem vorhergehenden Anspruch,
**dadurch gekennzeichnet,**
**dass** die Schwelle durch ein Konfidenzintervall des gleitenden Mittelwertes definiert wird.

3. Verfahren nach einem der vorhergehenden Ansprüche, wobei das Stellventil ein Steuermodul aufweist,
**dadurch gekennzeichnet,**
**dass** das Verfahren auf dem Steuermodul des Stellventils abläuft.

4. verranren nach einem der Anspruche 1 bis 2, wobei das Steilventil ein Steuermodul aufweist, **dadurch gekennzeichnet,**
**dass** das Verfahren auf mindestens einem Gerat abläuft, welches über ein Netzwerk mit dem Steuermodul des Stellventils verbunden ist.

5. Stellventil mit
5.1 Mitteln zum Messen und zum Aufzeichnen der Position des Ventilgliedes in der Schließstellung;
5.1.1 wobei die Position des Ventilgliedes beim Einnehmen der Schließstellung gemessen und aufgezeichnet werden kann;
5.2 Mitteln zum Berechnen eines Mittelwertes, eines gleitenden Mittelwertes und einer zugehörigen Standardabweichung aus aufgezeichneten Positionen;
5.3 Mitteln zum Bestimmen und/oder Vorgeben von Zeitintervallen;
5.3.1 wobei während eines Zeitintervalls wiederholt die Position des Stellglieds des Stellventils in der Schließstellung gemessen und aufgezeichnet werden können, um einen Kalibrations-Datensatz zu erlangen;
5.3.2 wobei aus dem Kalibrations-Datensatz der Mittelwert und die Standardabweichung der Position des Stellglieds in der Schließstellung berechnet werden können;
5.3.3 wobei über eine vorgegebene Anzahl gemessener Positionen ein gleitender Mittelwert fortlaufend bestimmt werden kann; und
5.3.4 wobei aus dem Mittelwert und der Standardabweichung der Position des Stellglieds aus dem Kalibrations-Datensatz und der vorgegebenen Anzahl eine Schwelle für den gleitenden Mittelwert bestimmt werden kann; und mit
5.4 Mitteln zum Ausgeben einer Meldung;
**dadurch gekennzeichnet, dass**
5.5 das Stellventil so konfiguriert ist, dass es ein Verfahren nach einem der Ansprüche 1 bis 2 durchführen kann.

6. Stellventil nach dem vorhergehenden Anspruch,
**gekennzeichnet durch**
6.1 ein Steuermodul;
6.2 wobei die Mittel
6.2.1 zum Messen und zum Aufzeichnen der Position des Ventilgliedes in der Schließstellung,
6.2.2 zum Berechnen eines Mittelwertes, eines gleitenden Mittelwertes und einer zugehörigen Standardabweichung aus aufgezeichneten Positionen,
6.2.3 zum Bestimmen und/oder Vorgeben von Zeitintervallen, und
6.2.4 zum Ausgeben einer Meldung
6.3 durch das Steuermodul bereitgestellt werden.

7. Stellventil nach Anspruch 5,
**gekennzeichnet durch**
7.1 ein Steuermodul;
7.2 wobei die Mittel
7.2.1 zum Messen und zum Aufzeichnen der Position des Ventilgliedes in der Schließstellung,
7.2.2 zum Berechnen eines Mittelwertes, eines gleitenden Mittelwertes und einer zugehörigen Standardabweichung aus aufgezeichneten Positionen,
7.2.3 zum Bestimmen und/oder Vorgeben von Zeitintervallen, und
7.2.4 zum Ausgeben einer Meldung
7.3 durch mindestens ein Gerät bereitgestellt werden, welches über ein Netzwerk mit dem Steuermodul verbunden ist.

8. Computerprogramm,
**dadurch gekennzeichnet,**
**dass** es ausführbare Instruktionen beinhaltet, welche bei Ausführung auf einer Recheneinheit, einem Mikrocontroller, DSP, FPGA oder Computer oder auf einer Mehrzahl davon in einem Netzwerk das Verfahren nach einem der Verfahrensansprüche ausführt.

9. Computerprogramm mit Programmcode-Mitteln, um ein Verfahren gemäß einem der Verfahrensansprüche durchzuführen, wenn das Computerprogramm auf einer Recheneinheit, einem Mikrocontroller, DSP, FPGA oder Computer oder auf einer Mehrzahl davon in einem Netzwerk ausgeführt wird.

10. Datenträger, auf dem eine Datenstruktur gespeichert ist, die nach einem Laden in einen Arbeits- und/ oder Hauptspeicher einer Recheneinheit, eines Mikrocontrollers, DSPs, FPGAs oder Computers oder einer Mehrzahl davon in einem Netzwerk das Verfahren nach einem der Verfahrensansprüche ausführt.

11. Computerprogramm-Produkt mit auf einem maschinenlesbaren Träger gespeicherten Programmcode-Mitteln, um alle Schritte gemäß einem der Verfahrensansprüche durchzuführen, wenn das Programm auf einer Recheneinheit, einem Mikrocontroller, DSP, FPGA oder Computer oder auf einer Mehrzahl davon in einem Netzwerk ausgeführt wird.

12. Moduliertes Datensignal, welches von einer Recheneinheit, einem Mikrocontroller, DSP, FPGA oder Computer oder von einer Mehrzahl davon in einem Netzwerk ausführbare Instruktionen zum Ausführen eines Verfahrens nach einem der Verfahrensansprüche enthält.

13. Steuermodul für ein Stellventil, mit
13.1 Mitteln zum Messen und zum Aufzeichnen der Position des Ventilgliedes des Stellventils in der Schließstellung;
13.1.1 wobei die Position des Ventilgliedes beim Einnehmen der Schließstellung gemessen und aufgezeichnet werden kann;
13.2 Mitteln zum Berechnen eines Mittelwertes, eines gleitenden Mittelwertes und einer zugehörigen Standardabweichung aus aufgezeichneten Positionen;
13.3 Mitteln zum Bestimmen und/oder Vorgeben von Zeitintervallen;
13.3.1 wobei während eines Zeitintervalls wiederholt die Position des Stellglieds des Stellventils in der Schließstellung gemessen und aufgezeichnet werden kann, um einen Kalibrations-Datensatz zu erlangen;
13.3.2 wobei aus dem Kalibrations-Datensatz der Mittelwert und die Standardabweichung der Position des Stellglieds in der Schließstellung berechnet werden können;
13.3.3 wobei über eine vorgegebene Anzahl gemessener Positionen ein gleitender Mittelwert fortlaufend bestimmt werden kann; und
13.3.4 wobei aus dem Mittelwert und der Standardabweichung der Position des Stellglieds aus dem Kalibrations-Datensatz und der vorgegebenen Anzahl eine Schwelle für den gleitenden Mittelwert bestimmt werden kann; und mit
13.4 Mitteln zum Ausgeben einer Meldung;
13.5 wobei das Steuermodul so konfiguriert ist, dass es ein Verfahren nach einem der Ansprüche 1 bis 2 durchführen kann.

## Claims

1. A method for detecting inadequate valve seat integrity of a control valve having a valve member, comprising the following steps:
1.1 to obtain a calibration data set, the position of the valve member of the control valve in the closed position is repeatedly measured and recorded during a time interval;
1.2 the mean value and the standard deviation of the position of the valve member in the closed position are calculated from the calibration data set;
1.3 during continued operation of the control valve, the position of the valve member in the closed position is measured and recorded further;
1.4 a moving average value is continuously determined over a specified number of the positions measured during further operation;
1.5 a threshold for the moving average is determined from the mean value and the standard deviation of the position of the valve member from the calibration data set and the specified number;
**characterized in that**
1.6 if during a further time interval the moving average deviates multiple times from the mean value of the calibration data set by more than the threshold,
1.6.1 a straight line is formed from the positions measured during the further time interval;
1.6.2 wherein the gradient and the axis section of the straight line are determined; and
1.7 a message is output if
1.7.1 the value of the gradient of the straight line is larger than the quotient of the threshold and the length of the further time interval and/or
1.7.2 the axis section deviates from a calibration axis section from the calibration data set by more than the threshold.

2. The method according to the preceeding claim,
**characterized in that**
the threshold is defined by a confidence interval of the moving average.

3. The method according to one of the preceeding claims, wherein the control valve has a control module,
**characterized in that**
the method is performed by the control module of the control valve.

4. The method according to one of claims 1 to 2, wherein the control valve has a control module,
**characterized in that**
the method is performed by at least one device that is connected to the control module of the control valve by a network.

5. A control valve having
5.1 means for measuring and for recording the position of the valve member in the closed position;
5.1.1 wherein the position of the valve member can be measured and recorded on entering the closed position;
5.2 means for calculating a mean value, a moving average and an associated standard deviation from recorded positions;
5.3 means for determining and/or specifying time intervals;
5.3.1 wherein the position of the valve member of the control valve in the closed position is repeatedly measuredable and recordedable during a time interval in order to obtain a calibration data set;
5.3.2 wherein the mean value and the standard deviation of the position of the valve member in the closed position are calculatable from the calibration data set;
5.3.3 wherein a moving average is continuously determinable over a specified number of measured positions; and
5.3.4 wherein a threshold for the moving average is determinable from the mean value and the standard deviation of the position of the valve member from the calibration data set and said specified number; and further having
5.4 means for outputting a message;
**characterized in that**
5.5 the control valve is configured in such a way that it can perform a method according to one of claims 1 to 2.

6. The control valve according to the preceding claim,
**characterized by**
6.1 a control module;
6.2 wherein the means
6.2.1 for measuring and recording the position of the valve member in the closed position,
6.2.2 for calculating a mean value, a moving average and an associated standard deviation from recorded positions,
6.2.3 for determining and/or specifying time intervals and
6.2.4 for outputting a message
6.3 are provided by the control module.

7. The control valve according to claim 5,
**characterized by**
7.1 a control module;
7.2 wherein the means
7.2.1 for measuring and recording the position of the valve member in the closed position,
7.2.2 for calculating a mean value, a moving average and an associated standard deviation from recorded positions,
7.2.3 for determining and/or specifying time intervals and
7.2.4 for outputting a message
7.3 are provided by at least one device that is connected to the control module by a network.

8. A computer program,
**characterized in that**
it comprises executable instructions, which perform the method according to one of the method claims when executed on a processing unit, a microcontroller, DSP, FPGA or computer or on a plurality thereof in a network.

9. A computer program comprising program code means for performing the method according to one of the method claims when the computer program is executed on a processing unit, a microcontroller, DSP, FPGA or computer or on a plurality thereof in a network.

10. A storage medium, on which a data structure is stored, wherein said data structure performs the method according to one of the method claims after having been loaded into a main and/or working memory of a processing unit, a microcontroller, DSP, FPGA or computer or of a plurality thereof in a network.

11. A computer program product having program code means stored on a machine-readable storage medium in order to perform all steps according to one of the method claims when the program is executed on a processing unit, a microcontroller, DSP, FPGA or computer or on a plurality thereof in a network.

12. A modulated data signal comprising instructions executable on a processing unit, a microcontroller, DSP, FPGA or computer or on a plurality thereof in a network, for performing the method according to one of the method claims.

13. A control module for a control valve having
13.1 means for measuring and for recording the position of the valve member in the closed position;
13.1.1 wherein the position of the valve member can be measured and recorded on entering the closed position;
13.2 means for calculating a mean value, a moving average and an associated standard deviation from recorded positions;
13.3 means for determining and/or specifying time intervals;
13.3.1 wherein the position of the valve member of the control valve in the closed position is repeatedly measuredable and recordedable during a time interval in order to obtain a calibration data set;
13.3.2 wherein the mean value and the standard deviation of the position of the valve member in the closed position are calculatable from the calibration data set;
13.3.3 wherein a moving average is continuously determinable over a specified number of measured positions; and
13.3.4 wherein a threshold for the moving average is determinable from the mean value and the standard deviation of the position of the valve member from the calibration data set and said specified number; and further having
13.4 means for outputting a message;
13.5 wherein the control module is configured in such a way that it can perform a method according to one of claims 1 to 2.

## Revendications

1. Procédé de détection de l'intégrité défectueuse du siège d'une vanne de régulation avec un actionneur, comprenant les étapes suivantes :
1.1 pour obtenir un ensemble de données d'étalonnage, la position de l'actionneur de la vanne de régulation en position fermée est mesurée et enregistrée à plusieurs reprises pendant un intervalle de temps ;
1.2 la valeur moyenne et l'écart-type de la position de l'actionneur en position fermée sont calculés à partir de l'ensemble des données d'étalonnage ;
1.3 pendant la poursuite du fonctionnement de la vanne de régulation, la position de l'actionneur en position fermée est mesurée et enregistrée ;
1.4 une valeur moyenne mobile est déterminée en permanence sur un nombre prédéterminé de positions mesurées au cours de l'opération suivante ;
1.5 un seuil pour la moyenne mobile est déterminé à partir de la valeur moyenne et de l'écart type de la position de l'actionneur de l'ensemble des données d'étalonnage et à partir du nombre prédéterminé ;
**caractérisé en ce que**
1.6. si, dans un intervalle de temps supplémentaire, la moyenne mobile s'écarte plusieurs fois de plus que le seuil de la valeur moyenne de l'ensemble des données d'étalonnage,
1.6.1. une ligne droite est formée à partir des positions mesurées dans l'intervalle de temps supplémentaire
1.6.2 dans lequel la pente et l'intersection de la ligne droite sont déterminées ; et
1.7 un message est émis lorsque
1.7.1. le degré de pente de la ligne droite est supérieur au quotient du seuil et de la longueur de l'intervalle de temps supplémentaire, et/ou
1.7.2 l'interception s'écarte d'une interception d'étalonnage des données d'étalonnage de plus que le seuil.

2. Procédé selon la demande précédente,
**caractérisé en ce que**
le seuil est défini par un intervalle de confiance de la moyenne mobile.

3. Procédé selon l'une des revendications précédentes, dans laquelle la vanne de régulation comprend un module de commande,
**caractérisé en ce que**
la procédure se déroule sur le module de commande de la vanne de régulation.

4. Procédé selon l'une des revendications 1 à 2, dans laquelle la vanne de régulation possède un module de commande,
**caractérisé en ce que**
le processus se déroule sur au moins un appareil qui est relié par un réseau au module de commande de la vanne de régulation.

5. Vanne de régulation avec
5.1 des moyens de mesure et d'enregistrement de la position de l'élément de la vanne en position fermée ;
5.1.1. dans lequel la position de l'élément de la vanne peut être mesurée et enregistrée lorsqu'il prend la position fermée ;
5.2 des moyens de calculer une valeur moyenne, une valeur moyenne mobile et un écart-type associé par rapport aux positions enregistrées ;
5.3 des moyens permettant de déterminer et/ou de prédéterminer des intervalles de temps ;
5.3.1 dans lequel, pendant un intervalle de temps répété, la position de l'actionneur de la vanne de régulation en position fermée peut être mesurée et enregistrée pour obtenir un ensemble de données d'étalonnage ;
5.3.2 dans lequel la valeur moyenne et l'écart type de la position de l'actionneur en position fermée peuvent être calculés à partir de l'ensemble des données d'étalonnage ;
5.3.3 dans lequel une valeur moyenne mobile peut être déterminée en continu sur un nombre prédéterminé de positions mesurées ; et
5.3.4 dans lequel un seuil pour la moyenne mobile peut être déterminé à partir de la valeur moyenne et de l'écart type de la position de l'actionneur par rapport à l'ensemble des données d'étalonnage et à partir du nombre spécifié ; et avec
5.4 des moyens d'émission d'un message ;
**caractérisé en ce que**
5.5 la vanne de régulation est configurée pour effectuer une procédure selon l'une des revendications 1 à 2.

6. Vanne de régulation selon la revendication précédente,
**caractérisé par**
6.1 un module de contrôle ;
6.2 dans lequel les moyens
6.2.1 pour mesurer et enregistrer la position du membre de la vanne en position fermée,
6.2.2 pour calculer une valeur moyenne, une moyenne mobile et un écart-type associé par rapport aux positions enregistrées,
6.2.3 pour déterminer et/ou prédéterminer les intervalles de temps, et
6.2.4 pour produire un message
6.3 sont fournis par le module de contrôle.

7. Vanne de régulation selon la revendication 5,
**caractérisé par**
7.1 un module de contrôle ;
7.2 dans lequel les moyens
7.2.1 pour mesurer et enregistrer la position du membre de la vanne en position fermée,
7.2.2 pour calculer une valeur moyenne, une moyenne mobile et un écart-type associé par rapport aux positions enregistrées,
7.2.3 pour déterminer et/ou prédéterminer les intervalles de temps, et
7.2.4 pour produire un message
7.3 sont fournis par au moins un appareil relié au module de contrôle par un réseau.

8. Programme informatique,
**caractérisé par en ce**
qu'il contient des instructions exécutables qui, lorsqu'elles sont exécutées sur une unité de calcul, un microcontrôleur, un DSP, un FPGA ou un ordinateur ou sur une pluralité de ceux-ci dans un réseau, exécutent le procédé selon l'une des revendications de procédé.

9. Un programme informatique comprenant des moyens de code de programme pour exécuter un procédé selon l'une des revendications de procédé lorsque ledit programme informatique est exécuté sur une unité de calcul, un microcontrôleur, un DSP, un FPGA ou un ordinateur ou sur une pluralité de ceux-ci sur un réseau.

10. Support de données sur lequel est enregistrée une structure de données qui, après avoir été chargée dans une mémoire de travail et/ou une mémoire principale d'une unité de calcul, d'un microcontrôleur, d'un DSP, d'un FPGA ou d'un ordinateur ou d'une pluralité de ceux-ci dans un réseau, exécute le procédé selon l'une des revendications de procédé.

11. Un produit de programme informatique comprenant des moyens de code de programme enregistrés sur un support lisible par machine pour exécuter toutes les étapes selon l'une des revendications de procédé lorsque le programme est exécuté sur une unité de calcul, un microcontrôleur, un DSP, un FPGA ou un ordinateur ou sur une pluralité de ceux-ci sur un réseau.

12. Signal de données modulé contenant des instructions exécutables par une unité de calcul, un microcontrôleur, un DSP, un FPGA ou un ordinateur ou par une pluralité de ceux-ci sur un réseau pour exécuter un procédé selon l'une des revendications de procédé.

13. Module de commande pour une vanne de régulation, comprenant
13.1 des moyens de mesure et d'enregistrement de la position de l'élément de la vanne de régulation en position fermée ;
13.1.1 permettant de mesurer et d'enregistrer la position de l'élément de la vanne lorsque celle-ci est en position fermée ;
13.2 des moyens de calculer une valeur moyenne, une valeur moyenne mobile et un écart-type associé par rapport aux positions enregistrées ;
13.3 des moyens permettant de déterminer et/ou de prédéterminer d'intervalles de temps ;
13.3.1 dans lequel, pendant un intervalle de temps, la position de l'actionneur de la vanne de régulation en position fermée peut être mesurée et enregistrée répétitivement pour obtenir un ensemble de données d'étalonnage ;
13.3.2 dans lequel la valeur moyenne et l'écart type de la position de l'actionneur en position fermée peuvent être calculés à partir de l'ensemble des données d'étalonnage ;
13.3.3 dans lequel une moyenne mobile peut être déterminée en continu sur un nombre prédéterminé de positions mesurées ; et
13.3.4 dans lequel un seuil pour la moyenne mobile peut être déterminé à partir de la valeur moyenne et de l'écart type de la position de l'actionneur par rapport à l'ensemble des données d'étalonnage et à partir du nombre prédéterminé ; et avec
13.4 des moyens d'émission d'un message ;
13.5 dans lequel le module de contrôle est configuré pour exécuter une procédure selon l'une quelconque des revendications 1 à 2.
